# EUROPÄISCHE PATENTSCHRIFT

(11) **EP 3 517 377 B1**
(45) Veröffentlichungstag und Bekanntmachung des Hinweises auf die Patenterteilung: **11.05.2022**
(21) Anmeldenummer: 18211928.9
(22) Anmeldetag: 12.12.2018
(51) Int. Cl.: B60T 8/32, B60W 30/18, B60W 10/196

(54) **VERFAHREN ZUM BETRIEB EINES KRAFTFAHRZEUGES SOWIE KRAFTFAHRZEUG**
MOTOR VEHICLE AND METHOD FOR OPERATING A MOTOR VEHICLE
PROCÉDÉ DE FONCTIONNEMENT D'UN VÉHICULE AUTOMOBILE AINSI QUE VÉHICULE AUTOMOBILE

(30) Priorität: 24.01.2018 DE 102018201036
(43) Veröffentlichungstag der Anmeldung: 31.07.2019
(73) Patentinhaber: AUDI AG, 85045 Ingolstadt (DE)
(72) Erfinder: Ernst, Herbert, 85055 Ingolstadt (DE)

(56) Entgegenhaltungen:
- CN-A- 104 960 435
- CN-A- 107 407 405
- DE-A1-102012 106 535

## Beschreibung

Die Erfindung betrifft ein Verfahren zum Betrieb eines Kraftfahrzeuges mit den Merkmalen des Oberbegriffs des Anspruchs 1. Die Erfindung betrifft weiterhin ein Kraftfahrzeug mit den Merkmalen des Oberbegriffs des Anspruchs 9.

Heutzutage sind im Rahmen einer Elektrifizierung des Kraftfahrzeugbereiches Hybrid- und/oder vollelektrisch angetriebene Kraftfahrzeuge bekannt. Derartige Kraftfahrzeuge weisen entweder ausschließlich oder zusätzlich zu einem Verbrennungsmotor eine elektrische Maschine auf. Die elektrische Maschine dient hierbei zum Einen einem Antrieb des Kraftfahrzeuges, also als ein Antriebsmotor. Zum Anderen dient die elektrische Maschine auch als ein Generator zur (Rück-)Gewinnung von elektrischer Energie, welche beispielsweise zum Betrieb der elektrischen Maschine und/oder zum Betrieb elektrischer Komponenten des Kraftfahrzeuges dient. Hierbei wird gemäß des generatorischen Prinzips die Bewegungsenergie des fahrenden Kraftfahrzeuges genutzt, um die elektrische Maschine generatorisch zu betreiben und somit die Bewegungsenergie in elektrische Energie zu wandeln und anschließend beispielsweise in einer Batterie innerhalb des Kraftfahrzeuges zu speichern.

Eine derartige (Rück-)Gewinnung von Energie ist auch unter dem Begriff Rekuperation bekannt. So beschreibt die DE 10 2013 215 670 A1 ein Verfahren zur Rekuperation von elektrischer Energie innerhalb eines Kraftfahrzeuges, bei dem ein auftretender mechanischer Widerstand beim generatorischen Betrieb einer elektrischen Maschine zusätzlich zur Abbremsung des Kraftfahrzeuges, insbesondere bei einer Anti-Blockier-Bremsung (ABS-Bremsung) genutzt wird.

Ein derartiges Verfahren wird somit auch als Rekuperationsbremsung bezeichnet.

Die DE 10 2014 218 681 A1 beschreibt ein Verfahren zum Abbremsen eines Zweirades, insbesondere eines Fahrrades durch eine Rekuperationsbremsung mittels elektrischer Maschinen.

Die CN 107 407 405 A beschreibt ein weiteres Verfahren zur Rekuperation.

Ein weiterer wichtiger Aspekt, ist die Schaffung einer Redundanz, also die Sicherstellung eines Ersatzes beispielsweise bei einem Ausfall einer sicherheitsrelevanten Komponente eines Kraftfahrzeuges.

So ist beispielsweise aus der DE 10 2008 003 379 A1 ein redundantes Bremssystem für ein Kraftfahrzeug, insbesondere ein Nutzfahrzeug zu entnehmen, bei dem das Feststellbremssystem als ein Ersatzbremssystem bei einem Ausfall des Betriebsbremssystems herangezogen wird.

Insbesondere im, zusätzlich zur Elektrifizierung an Bedeutung gewinnenden Bereich der Entwicklung von autonom, also selbstständig fahrenden Kraftfahrzeugen, ist eine derartige Redundanz bei sicherheitsrelevanten Komponenten vorteilhaft und oftmals gefordert.

Ausgehend hiervon liegt der Erfindung die Aufgabe zugrunde, ein Verfahren zum Betrieb eines Kraftfahrzeuges anzugeben, mit dessen Hilfe ein Kraftfahrzeug zuverlässig abgebremst werden kann. Weiterhin liegt der Erfindung die Aufgabe zugrunde, ein Kraftfahrzeug anzugeben.

Die auf das Verfahren gerichtete Aufgabe wird erfindungsgemäß gelöst durch ein Verfahren zum Betrieb eines Kraftfahrzeuges mit den Merkmalen des Anspruchs 1. Die auf das Kraftfahrzeug gerichtete Aufgabe wird erfindungsgemäß gelöst durch ein Kraftfahrzeug mit den Merkmalen des Anspruchs 9.

Vorteilhafte Ausgestaltungen, Weiterbildungen und Varianten sind Gegenstand der Unteransprüche. Die im Hinblick auf das Verfahren aufgeführten Vorteile und bevorzugten Ausgestaltungen sind sinngemäß auf das Kraftfahrzeug zu übertragen und umgekehrt.

Das Verfahren dient zum Betrieb, insbesondere zur Reduzierung einer Geschwindigkeit eines Kraftfahrzeuges. Das Kraftfahrzeug ist als ein elektromotorisch angetriebenes Kraftfahrzeug ausgebildet. Unter dem elektromotorisch angetriebenen Kraftfahrzeug wird vorliegend ein Personenkraftwagen verstanden, welcher entweder einen hybriden Antrieb (Elektromotor und Verbrennungsmotor), sog. Plug-In Hybride (PHEV) oder einen reinen elektromotorischen Antrieb (Elektromotor), auch als "Battery Electric Vehicle (BEV) bezeichnet, aufweist.

Das Kraftfahrzeug weist hierbei eine elektrische Maschine zur positiven oder negativen Beschleunigung des Kraftfahrzeuges auf. Unter positiver Beschleunigung wird vorliegend speziell ein Antreiben des Kraftfahrzeuges verstanden. Die elektrische Maschine dient hierbei also als elektrischer Antriebsmotor. Unter negativer Beschleunigung wird vorliegend speziell ein Abbremsen des Kraftfahrzeuges durch die elektrische Maschine verstanden. Die elektrische Maschine ist vorliegend beispielsweise als eine Synchronmaschine ausgebildet.

Weiterhin weist das Kraftfahrzeug eine mechanische Bremsvorrichtung zur Reduzierung der Geschwindigkeit des Kraftfahrzeuges auf. Unter mechanischer Bremsvorrichtung wird vorliegend beispielsweise eine Scheibenbremsvorrichtung oder eine Trommelbremsvorrichtung verstanden, die das Kraftfahrzeug reibkraftbehaftet abbremsen.

Zur Durchführung des Verfahrens wird in einem speziellen Brems-Betriebsmodus eine Verzögerungsanforderung erfasst. Unter dem speziellen Brems-Betriebsmodus wird vorliegend eine vorgegebene Art und Weise während eines Fahrbetriebes des Kraftfahrzeuges verstanden, durch den das Kraftfahrzeug abgebremst wird.

Unter der Verzögerungsanforderung wird vorliegend speziell eine Gesamtheit an für eine Abbremsung relevanten Parametern verstanden. Derartige Parameter sind beispielsweise die Geschwindigkeit des Kraftfahrzeuges vor der Abbremsung, die geforderte Geschwindigkeit des Kraftfahrzeuges nach der Abbremsung sowie die Zeit, in der das Kraftfahrzeug auf die Geschwindigkeit nach der Abbremsung abgebremst werden soll. Eine Verzögerungsanforderung ist somit beispielsweise die Anforderung, das Kraftfahrzug aus einer Geschwindigkeit von 30 km/h innerhalb von 10 Sekunden auf eine Geschwindigkeit von 10 km/h abzubremsen.

In Abhängigkeit der Verzögerungsanforderung wird anschließend ein Solldrehzahlverlauf der elektrischen Maschine ermittelt. Die Ermittlung sowie die Erfassung der zuvor genannten Verzögerungsanforderung erfolgt beispielsweise mittels einer Steuereinheit, die innerhalb des Kraftfahrzeuges angeordnet ist.

Der Solldrehzahlverlauf weist einen von der Verzögerungsanforderung abhängigen sowie degressiven, also abfallenden Verlauf in Abhängigkeit der Zeit auf. Mit anderen Worten: Die Verzögerungsanforderung und somit auch der davon abhängige Solldrehzahlverlauf legt fest, wie stark die Abbremsung zu erfolgen hat.

Anschließend wird, um die Verzögerungsanforderung zu erfüllen, eine Istdrehzahl der elektrischen Maschine zur Reduzierung der Geschwindigkeit des Kraftfahrzeuges an den ermittelten Solldrehzahlverlauf angepasst. Aufgrund einer mechanischen Kupplung einer Welle der elektrischen Maschine mit den Rädern des Kraftfahrzeuges, steht die Istdrehzahl hierbei in Korrelation mit der Raddrehzahl und somit auch mit der Geschwindigkeit des Kraftfahrzeuges.

Zur Reduzierung des Kraftfahrzeuges wird daher die Istdrehzahl der elektrischen Maschine auf eine durch die Verzögerungsanforderung vorgegebene Drehzahl reduziert. Die Reduzierung erfolgt beispielsweise durch eine aktive Ansteuerung der elektrischen Maschine durch die Steuereinheit. Alternativ, sofern zur Erfüllung der Verzögerungsanforderung ausreichend, erfolgt die Reduzierung durch die Verringerung der Istdrehzahl aufgrund des Eingangs im Zusammenhang mit der Rekuperation genannten mechanischen Widerstandes der elektrischen Maschine im generatorischen Betrieb. Unter aktiver Ansteuerung der elektrischen Maschine wird vorliegend speziell eine an die Verzögerungsanforderung angepasste und gesteuerte Bestromung der elektrischen Maschine durch die Steuereinheit verstanden, um die Istdrehzahl zu reduzieren.

Hierdurch ist ein zur mechanischen Bremsvorrichtung redundantes oder zusätzliches Bremsverfahren zur Erfüllung der Verzögerungsanforderung ausgebildet. Insbesondere wird hierbei auf bereits vorhandene Komponenten des Kraftfahrzeuges, wie z.B. die elektrische Maschine, zurückgegriffen, sodass auf eine zusätzliche teilweise kostenintensive Installation zusätzlicher, redundanter Bremskomponenten verzichtet werden kann.

Erfindungsgemäß ist dem Solldrehzahlverlauf weiter ein Drehzahlband zugewiesen, innerhalb dessen die Istdrehzahl geregelt wird. Hierdurch wird eine mögliche Abweichung der Istdrehzahl von dem Solldrehzahlverlauf ermöglicht, ohne im Wesentlichen von dem Solldrehzahlverlauf abzuweichen. Dies ermöglicht eine Berücksichtigung beispielsweise unerwartet auftretender Istdrehzahlschwankungen, ohne die Anpassung an den Solldrehzahlverlauf und somit die Reduzierung der Geschwindigkeit des Kraftfahrzeuges negativ zu beeinflussen.

Unter dem Drehzahlband wird vorliegend allgemein ein definierter Abstand zu einer höheren und einer niedrigeren Drehzahl von einer jeweiligen zeitabhängigen Solldrehzahl des Solldrehzahlverlaufs verstanden. Beispielsweise definiert das Drehzahlband einen Abstand von dem Solldrehzahlverlauf um +/- 500 Umdrehungen pro Minuten (U/min). D.h. die Istdrehzahl kann von dem Solldrehzahlverlauf um + 500 U/min oder um - 500 U/min abweichen, ohne im Wesentlichen von dem Solldrehzahlverlauf abzuweichen.

Das Drehzahlband und somit der vorgegebene Abstand wird beispielweise im Rahmen einer Konfiguration der Steuereinheit, beispielsweise im Rahmen der Herstellung des Kraftfahrzeuges festgelegt.

Zweckmäßigerweise wird der Solldrehzahlverlauf bei einem Annähern der Istdrehzahl an den Abstand des Drehzahlbandes gegenläufig zum Verlauf der Istdrehzahl angepasst. Zum besseren Verständnis wird diese Anpassung anhand des nachfolgenden Beispiels näher erläutert:
Das Drehzahlband ist beispielsweise gemäß des zuvor genannten Beispiels auf einen Abstand von +/- 500 U/min von dem Solldrehzahlverlauf definiert. Weist zu einem definierten Zeitpunkt der Solldrehzahlverlauf einen Wert von beispielsweise 1500 U/min auf, so ist eine Abweichung der Istdrehzahl von diesem Wert um +/- 500 U/min für eine Regelung und somit für das Abbremsen des Kraftfahrzeuges im Rahmen der Verzögerungsanforderung zulässig. Nähert sich nun die Istdrehzahl beispielsweise an die maximal zulässige Drehzahl von 2000 U/min an (ausgehend von 1500 U/min also von "unten") oder übersteigt diese sogar, so wird der Solldrehzahlverlauf in Richtung einer kleiner Drehzahl, beispielsweise 1200 U/min geregelt, insbesondere angepasst, sodass die Istdrehzahl dem Solldrehzahlverlauf erneut folgt und somit wieder innerhalb des Drehzahlbandes verläuft.

Analog erfolgt die Anpassung bei einem Annähern an die minimal zulässige Drehzahl, in vorliegendem Beispiel 1000 U/min.

Unter Annähern oder Übersteigen wird vorliegend speziell ein nahezu Erreichen (im Falle von Annähern) oder ein betragsmäßiges Annehmen eines höheren Drehzahlwertes (im Falle von Überschreiten) verstanden.

Mit anderen Worten: Bei einem Annähern oder Überschreiten des Drehzahlbandes nach "oben" (also mehr als 2000 U/min) ist die Verzögerungsanforderung nicht ausreichend genug, um das Kraftfahrzeug abzubremsen, die Istdrehzahl der elektrischen Maschine wird also nicht stark genug reduziert. Somit wird der Solldrehzahlverlauf und folglich auch die Verzögerungsanforderung derart angepasst, dass der Solldrehzahlverlauf kleinere Drehzahlen aufweist und somit das Kraftfahrzeug stärker gebremst wird.

Umgekehrt erfolgt bei einem Annähern oder Überschreiten nach "unten" aus dem Drehzahlband, also einem Abfall der Istdrehzahl unterhalb der 1000 U/min, eine Erhöhung des Solldrehzahlverlaufs. Im Zusammenhang mit der Bremskraft bedeutet ein Überschreiten des Drehzahlbandes nach "unten", dass die Istdrehzahl zu stark abfällt, also zu stark gebremst wird. Eine Erhöhung des Solldrehzahlverlaufs bedingt eine geringere Verzögerung des Kraftfahrzeuges und eine dadurch bedingte Anpassung der Istdrehzahl an den "neuen" Solldrehzahlverlauf.

Der Vorteil dieser Ausgestaltung ist in einer Radschlupfregelung zu sehen. Durch die Anpassung des Solldrehzahlverlaufs ist eine Radschlupfregelung derart realisiert, dass regelungsbedingt so viel Radschlupf erzeugt wird, wie zur Erfüllung der Verzögerungsanforderung notwendig ist. Jedoch wird verhindert, dass zu viel Radschlupf auftritt und somit insbesondere bei einem zu starken Bremsen die Räder blockieren und somit der Bremsvorgang des Kraftfahrzeuges instabil wird. Unter Radschlupf wird vorliegend speziell ein Drehzahlunterschied von miteinander in Reibkontakt stehender Fahrbahn und der Lauffläche der Reifen verstanden.

In einer bevorzugten Weiterbildung wird das Kraftfahrzeug bei einem Ausfall der mechanischen Bremsvorrichtung mittels des bereits beschriebenen Verfahrens durch die elektrische Maschine in den Stillstand abgebremst. Unter Ausfall der mechanischen Bremsvorrichtung wird vorliegend speziell zumindest eine erhebliche Betriebsbeeinträchtigung und insbesondere ein Totalausfall der Funktion der mechanischen Bremsvorrichtung verstanden.

Hierdurch wird eine Redundanz, insbesondere hinsichtlich eines Ersatzes geschaffen, um das Kraftfahrzeug bei einem Ausfall der mechanischen Bremsvorrichtung überhaupt und sicher abzubremsen.

Gemäß einer zweckdienlichen Ausgestaltung sind mehrere Solldrehzahlverläufe, beispielsweise als Kennlinien auf einer Datenbank, beispielsweise innerhalb des Kraftfahrzeuges hinterlegt. Ein benötigter Solldrehzahlverlauf wird dabei basierend auf der Verzögerungsanforderung geschwindigkeitsabhängig ausgewählt und vorgegeben. Beispielsweise weisen die hinterlegten Solldrehzahlverläufe unterschiedliche Verläufe auf, anhand derer das Kraftfahrzeug aus unterschiedlichen Geschwindigkeiten vorzugsweise in den Stillstand gebremst werden kann. Im speziellen Bremsmodus greift somit die Steuereinheit auf die hinterlegten Solldrehzahlverläufe zurück, wählt den Solldrehzahlverlauf aus, dessen Startgeschwindigkeit zumindest annähernd mit der aktuellen Geschwindigkeit des Kraftfahrzeuges übereinstimmt und legt diesen der Istdrehzahlanpassung zu Grunde.

Zweckdienlicherweise ist ein autonomer Fahrbetrieb zur autonomen Steuerung einer Fahraufgabe des Kraftfahrzeuges vorgesehen. Unter der Fahraufgabe wird vorliegend speziell ein autonomes Fahren mit geringer Geschwindigkeit beispielsweise aufgrund eines Staus oder innerhalb eines Parkhauses im Sinne eines Stauassistenten beziehungsweise eines Parkhauspiloten verstanden. Insbesondere ist der autonome Fahrbetrieb zu einem autonomen Fahren ab einem Level 4 der aktuell im Bezug auf ein autonomes Fahren von Kraftfahrzeugen relevanten Normen ausgebildet. Eine derartige Norm ist gegenwärtig beispielsweise die SAE J3016. Unter Level 4 wird hierbei ein vollautomatisiertes Fahren verstanden. Die Führung des Fahrzeuges wird also vollständig von dem System übernommen und der Fahrer lediglich bei Bedarf durch das System zur Führung des Fahrzeuges aufgefordert.

Insbesondere im autonomen Fahrbetrieb ist durch das beschriebene Verfahren ein- im Hinblick auf eine Regelung des Radschlupfes - sicheres und weiterhin redundantes Abbremsen des Kraftfahrzeuges bei einem Ausfall der mechanischen Bremsvorrichtung ermöglicht. Die Steuerung des Kraftfahrzeuges erfolgt hierbei beispielsweise durch die bereits erwähnte Steuereinheit, welche ebenfalls bei einem Ausfall der mechanischen Bremsvorrichtung das Kraftfahrzeug mittels der elektrischen Maschine beispielsweise in den Stillstand abbremst. Grundsätzlich erfolgt eine Ansteuerung der mechanischen Bremsvorrichtung und der elektrischen Maschine als "redundante Bremsvorrichtung" mittels getrennter Steuerkreise.

Gemäß einer bevorzugten Weiterbildung ist der spezielle Brems-Betriebsmodus ausschließlich zur Reduzierung von Geschwindigkeiten des Kraftfahrzeugs um einen Wert im Bereich von 10 km/h bis 30 km/h und speziell bis zu einer Geschwindigkeit von bis zu 20 km/h ausgelegt. Vorzugsweise wird der spezielle Brems-Betriebsmodus nur bei geringen Geschwindigkeiten bis maximal 30 km/h oder bis maximal 20 km/h eingesetzt, insbesondere bei einem vollautonomen Fahrbetrieb wie Stauassistent oder Parkhauspilot.

Das hierin beschriebene Konzept ist jedoch nicht auf geringe Geschwindigkeiten begrenzt sondern wird auch zum Abbremsen aus höheren Geschwindigkeiten von z.B. bis 100km/h oder bis 130km/h eingesetzt. Der mögliche Geschwindigkeitsbereich ist dabei allgemein abhängig von der Bremsleistung sowie der Anzahl der elektrischen Maschinen (ein oder mehrere). Bevorzugt sind mehrere elektrische Maschinen vorgesehen, die derart ausgelegt sind, um solche höheren Geschwindigkeiten zu reduzieren. Speziell sind die mehreren elektrischen Maschinen als Radnabenmotoren ausgebildet.

Vorzugsweise wird für jede elektrische Maschine ein Solldrehzahlverlauf vorgegeben. Dies kann individuell für die unterschiedlichen Maschinen erfolgen oder durch einen gemeinsamen Solldrehzahlverlauf für alle Maschinen. Der Vergleich der Istdrehzahl mit der Solldrehzahl erfolgt insbesondere individuell bei jeder Maschine und wird individuell an Solldrehzahlverlauf angepasst.

Der Vorteil dieser Weiterbildung ist in zwei Aspekten zu sehen. Zum Einen hat sich das dem speziellen Brems-Betriebsmodus zu Grunde liegende Verfahren in dem genannten Geschwindigkeitsbereich als geeignet erwiesen, das Kraftfahrzeug sicher und zuverlässig abzubremsen und insbesondere in den Stillstand zu bremsen. Zum Anderen ist für Fahraufgaben, welche innerhalb dieses Geschwindigkeitsbereichs auftreten, z.B. Stauassistent und/oder Parkhauspilot kein zusätzliches und teures redundantes (mechanisches) Ersatzbremssystem notwendig. Ein solches ist daher vorzugsweise nicht vorgesehen. Mit dem beschriebenen Verfahren kann - wie bereits erwähnt - auf bereits vorhandene Komponenten zurückgegriffen werden. Das hier beschriebene Verfahren ist daher besonders geeignet, um bei einem Kraftfahrzeug (voll-) autonome Fahrbetriebe speziell für geringe Geschwindigkeiten ohne Zusatzaufwand für ein redundantes mechanisches Ersatzbremssystem zu implementieren.

Vorzugsweise wird der spezielle Brems-Betriebsmodus nur bei einem Ausfall der mechanischen Bremsvorrichtung aktiviert. Hierdurch ist zum Einen die zuvor genannte Redundanz geschaffen und zum Anderen wird nur in einer Notsituation in die normalen Betriebsmodi (Beschleunigen und/oder Rückgewinnen von elektrischer Energie) der elektrischen Maschine eingegriffen.

Ausführungsbeispiele der Erfindung werden nachfolgend anhand der Figuren näher erläutert. Diese zeigen teilweise in stark vereinfachten Darstellungen
- Fig. 1: eine schematische Teilskizze eines Kraftfahrzeuges sowie
- Fig. 2: ein skizzierter Drehzahlverlauf in Abhängigkeit der Zeit.

In den Figuren sind gleichwirkende Teile mit den gleichen Bezugszeichen dargestellt.

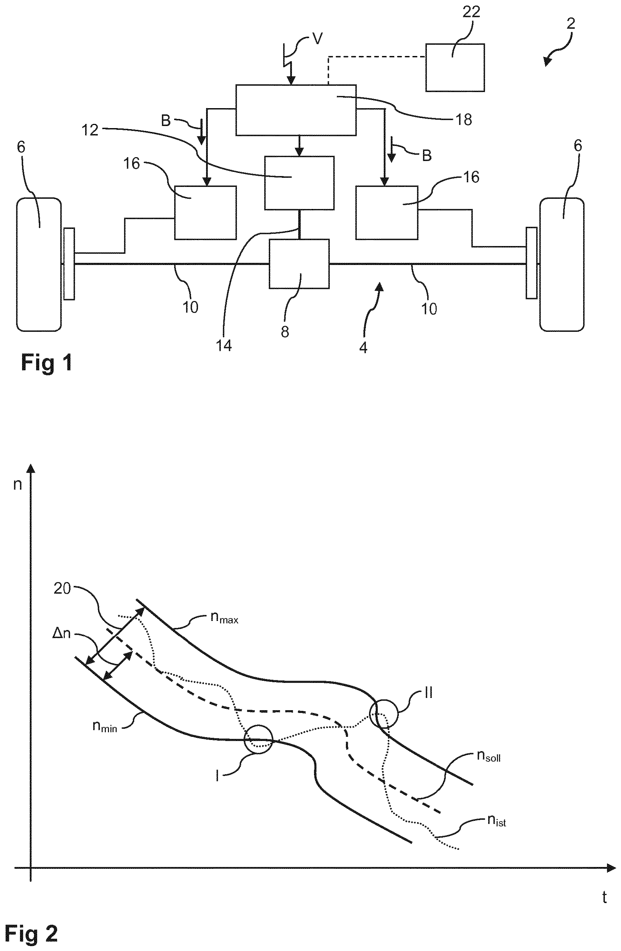

In Fig. 1 ist eine grob skizzierte Teildarstellung eines Kraftfahrzeuges 2, insbesondere einer Achse 4 des Kraftfahrzeuges 2 gezeigt. Bei der Achse 4 handelt es sich beispielsweise um eine Hinterachse oder eine Vorderachse des Kraftfahrzeuges 2. Die nachfolgend aufgeführten Ausführungsbeispiele und Merkmale sind für eine Hinterachse und/oder eine Vorderachse übertragbar.

Die Achse 4 weist jeweils endseitig ein Rad 6 auf. Weiterhin weist die Achse 4 ein Differential 8 auf, welches über jeweils eine Antriebswelle 10 mit den Rädern 6 verbunden ist. Das Differential 8 ermöglicht eine Verteilung des zum Antrieb notwendigen Drehmoments sowie eine unterschiedliche Drehzahl der Räder 6, beispielsweise in einer Kurvenfahrt des Kraftfahrzeuges 2.

Das Kraftfahrzeug 2 weist im Ausführungsbeispiel eine elektrische Maschine 12 zum Antrieb des Kraftfahrzeuges 2 auf. Es handelt sich also im vorliegenden Ausführungsbeispiel um ein rein elektromotorisch angetriebenes Kraftfahrzeug 2. Alternativ weist das Kraftfahrzeug 2 sowohl einen Verbrennungsmotor als auch eine elektrische Maschine zum Antrieb auf, ist also nach Art eines Hybrid-Fahrzeuges ausgebildet. Die elektrische Maschine 12 ist über eine Abtriebswelle 14 mit dem Differential verbunden.

Zur Reduzierung der Geschwindigkeit weist das Kraftfahrzeug 2 eine mechanische Bremsvorrichtung 16 auf. Die mechanische Bremsvorrichtung 16 ist im Ausführungsbeispiel als eine herkömmliche Scheibenbremse ausgebildet. Somit weist das Kraftfahrzeug 2 im Ausführungsbeispiel zwei mechanische Bremsvorrichtungen 16 auf, also eine pro Rad 6.

Das Kraftfahrzeug 2 ist im Ausführungsbeispiel zu einem autonomen Fahren ausgebildet. D.h. das Kraftfahrzeug weist eine Steuereinheit 18 auf, mittels der das Kraftfahrzeug 2 anstelle eines Fahrers gesteuert wird. Mit anderen Worten: Der eigentliche Fahrer wird mehr zum Passagier des Kraftfahrzeuges 2. Das Beschleunigen, Abbremsen sowie Lenken wird von der Steuereinheit 18 übernommen. Beispielsweise wird eine Verzögerungsanforderung V, also eine Notwendigkeit zur Reduzierung der Geschwindigkeit in einer bestimmten Zeit, von der Steuereinheit 18 erfasst und auf Basis der Verzögerungsanforderung V ein Bremssignal B erzeugt. Das Bremssignal B wird anschließend an die mechanische Bremsvorrichtung 16 übermittelt, welche auf Basis des Bremssignals B ein Bremsmoment auf die Räder 6 ausübt.

Bei einem Ausfall, also beispielsweise zumindest einer erheblichen Betriebsbeeinträchtigung der mechanischen Bremsvorrichtung 16 ist das Kraftfahrzeug2 und insbesondere die Steuereinheit 18 derart eingerichtet, dass in Abhängigkeit der erfassten Verzögerungsanforderung V ein Solldrehzahlverlauf nₛₒₗₗ der elektrischen Maschine 12 ermittelt wird und das notwendige Bremsmoment von der elektrischen Maschine 12 erzeugt wird. Mit anderen Worten: Die elektrische Maschine 12 dient somit als Redundanz für die mechanische Bremsvorrichtung 16, um das Kraftfahrzeug 2 abzubremsen.

In Fig. 2 wird nun zur genaueren Erläuterung detaillierter auf das Verfahren eingegangen. In Fig. 2 ist ein skizzierter Form eine Drehzahl n der elektrischen Maschine 12 in Abhängigkeit der Zeit t dargestellt.

Wie bereits erwähnt, wird seitens der Steuereinheit 18 in Abhängigkeit der Verzögerungsanforderung V ein Solldrehzahlverlauf nₛₒₗₗ ermittelt. Da der Solldrehzahlverlauf nₛₒₗₗ einem Abbremsen des Kraftfahrzeuges, insbesondere in den Stillstand dient, weist er einen abfallenden Verlauf auf. D.h. die Solldrehzahl sinkt in ihrem Wert mit voranschreitender Zeit t. Dem Solldrehzahlverlauf nₛₒₗₗ ist ein Drehzahlband 20 zugewiesen. Das Drehzahlband 20 weist einen vorgegebenen Abstand Δn zu dem Solldrehzahlverlauf nₛₒₗₗ auf. Mit anderen Worten: Das Drehzahlband 20 ist definiert durch eine maximale Drehzahl nₘₐₓ sowie durch eine minimale Drehzahl nₘᵢₙ.

Zur Reduzierung der Geschwindigkeit des Kraftfahrzeuges 2 wird eine Istdrehzahl nᵢₛₜ der elektrischen Maschine 12 an den Solldrehzahlverlauf nₛₒₗₗ angepasst. Die Anpassung erfolgt beispielsweise durch eine aktive, ein Bremsmoment erzeugenden, Bestromung der elektrischen Maschine 12.

Um zu verhindern, dass während der Bremsung mittels der elektrischen Maschine 12 zu viel Radschlupf an den Rädern 6 auftritt und der Bremsvorgang dadurch instabil und unkontrollierbar wird, erfolgt eine Radschlupfabhängige Anpassung des Solldrehzahlverlaufes nₛₒₗₗ.

Unterschreitet beispielsweise die Istdrehzahl nᵢₛₜ das Drehzahlband 20 und somit die minimale Drehzahl nₘᵢₙ (vgl. I), so ist das von der elektrischen Maschine 12 erzeugte Bremsmoment zu stark und es droht ein Blockieren der Räder 6. Die Steuereinheit 18 passt im vorliegenden Fall somit den Solldrehzahlverlauf nₛₒₗₗ derart an, dass dieser in Richtung einer höheren Drehzahl "verschoben" wird und somit ein geringeres Bremsmoment von der elektrischen Maschine 12 erzeugt wird. Somit wird indirekt der mit dem Bremsmoment korrelierte Radschlupf derart geregelt, dass während des Bremsvorgangs genug Radschlupf erzeugt wird, um das Kraftfahrzeug 2 abzubremsen, jedoch nicht so viel Radschlupf erzeugt wird, der ein Blockieren der Räder 6 zur Folge hat und der Bremsvorgang dadurch unkontrolliert erfolgt. Analog umgekehrt erfolgt die zuvor beschriebene Anpassung bei einem Überschreiten des Drehzahlbandes 20 und somit der maximalen Drehzahl nₘₐₓ (vgl. II).

Insbesondere ist das zuvor beschriebene Verfahren zum Abbremsen des Kraftfahrzeuges 2 aus Geschwindigkeiten mit einem Wert von 10 km/h bis 30 km/h ausgebildet, beispielsweise im Betrieb eines Parkhauspiloten, bei dem die Steuereinheit 18 das Kraftfahrzeug autonom durch ein Parkhaus steuert. Die einzelnen Solldrehzahlverläufe nₛₒₗₗ sind beispielsweise auf einer Datenbank 22 hinterlegt und ein Solldrehzahlverlauf nₛₒₗₗ wird beispielsweise von der Steuereinheit 18 basierend auf der Verzögerungsanforderung V geschwindigkeitsabhängig ausgewählt und vorgegeben.

## Patentansprüche

1. Verfahren zum Betrieb eines Kraftfahrzeuges (2), welches aufweist:
- eine elektrische Maschine (12), zur positiven oder negativen Beschleunigung des Kraftfahrzeuges (2) sowie
- eine mechanische Bremsvorrichtung (16) zur Reduzierung der Geschwindigkeit des Kraftfahrzeuges (2),
wobei
- in einem speziellen Brems-Betriebsmodus eine Verzögerungsanforderung (V) erfasst wird,
- in Abhängigkeit der Verzögerungsanforderung (V) ein Solldrehzahlverlauf (nₛₒₗₗ) der elektrischen Maschine (12) ermittelt wird und
- eine Istdrehzahl (nᵢₛₜ) der elektrischen Maschine (12) zur Reduzierung der Geschwindigkeit des Kraftfahrzeuges (2) an den ermittelten Solldrehzahlverlauf (nₛₒₗₗ) angepasst wird, wobei dem Solldrehzahlverlauf (nₛₒₗₗ) ein Drehzahlband (20) zugewiesen ist und wobei das Drehzahlband (20) einen vorgegebenen Abstand (Δn) von dem Solldrehzahlverlauf (nₛₒₗₗ) definiert und die Istdrehzahl (nᵢₛₜ) innerhalb des Drehzahlbandes (20) geregelt wird.

2. Verfahren nach dem vorhergehenden Anspruch,
**dadurch gekennzeichnet, dass**
der Solldrehzahlverlauf (nₛₒₗₗ) bei einem Annähern der Istdrehzahl (nᵢₛₜ) an den Abstand (Δn) des Drehzahlbandes (20) gegenläufig zum Verlauf der Istdrehzahl (nᵢₛₜ) angepasst wird.

3. Verfahren nach einem der vorhergehenden Ansprüche,
**dadurch gekennzeichnet, dass**
das Kraftfahrzeug (2) mittels der elektrischen Maschine (12) beim Ausfall der mechanischen Bremsvorrichtung (16) in den Stillstand abgebremst wird.

4. Verfahren nach einem der vorhergehenden Ansprüche,
**dadurch gekennzeichnet, dass**
mehrere Solldrehzahlverläufe (nₛₒₗₗ) auf einer Datenbank (22) hinterlegt sind und ein Solldrehzahlverlauf (nₛₒₗₗ) basierend auf der Verzögerungsanforderung (V) geschwindigkeitsabhängig ausgewählt und vorgegeben wird.

5. Verfahren nach einem der vorhergehenden Ansprüche,
bei dem ein autonomer Fahrbetrieb zur autonomen Steuerung einer Fahraufgabe des Kraftfahrzeuges (2) vorgesehen ist und der spezielle Brems-Betriebsmodus insbesondere nur während des autonomen Fahrbetriebs erfolgt.

6. Verfahren nach einem der vorhergehenden Ansprüche,
**dadurch gekennzeichnet, dass**
der spezielle Brems-Betriebsmodus ausschließlich zur Reduzierung von Geschwindigkeiten des Kraftfahrzeuges (2) um einen Wert im Bereich von 10km/h bis 30km/h ausgelegt ist.

7. Verfahren nach einem der vorhergehenden Ansprüche,
**dadurch gekennzeichnet, dass**
mehrere elektrische Maschinen zur positiven und negativen Beschleunigung verwendet werden, insbesondere Radnabenmotoren.

8. Verfahren nach einem der vorhergehenden Ansprüche,
bei dem der spezielle Brems-Betriebsmodus nur bei einem Ausfall der mechanischen Bremsvorrichtung (16) aktiviert wird.

9. Kraftfahrzeug (2) welches aufweist:
- eine elektrische Maschine (12), zur positiven oder negativen Beschleunigung des Kraftfahrzeuges (2) sowie
- eine mechanische Bremsvorrichtung (16) zur Reduzierung der Geschwindigkeit des Kraftfahrzeuges (2), wobei zur Steuerung eines Brems-Betriebsmodus eine Steuereinheit (18) vorgesehen ist und die Steuereinheit (18) derart eingerichtet ist, dass im Betrieb
- in dem speziellen Brems-Betriebsmodus eine Verzögerungsanforderung (V) erfasst wird,
- in Abhängigkeit der Verzögerungsanforderung (V) ein Solldrehzahlverlauf (nₛₒₗₗ) der elektrischen Maschine (12) ermittelt wird und
- eine Istdrehzahl (nᵢₛₜ) der elektrischen Maschine (12) zur Reduzierung der Geschwindigkeit des Kraftfahrzeuges (2) an den ermittelten Solldrehzahlverlauf (nₛₒₗₗ) angepasst wird, wobei dem Solldrehzahlverlauf (nₛₒₗₗ) ein Drehzahlband (20) zugewiesen ist und **dadurch gekennzeichnet, dass** das Drehzahlband (20) einen vorgegebenen Abstand (Δn) von dem Solldrehzahlverlauf (nₛₒₗₗ) definiert und die Istdrehzahl (nᵢₛₜ) innerhalb des Drehzahlbandes (20) geregelt wird.

## Claims

1. Method for operating a motor vehicle (2), which has
- an electrical engine (12) for the positive or negative acceleration of the motor vehicle (2) and
- a mechanical braking device (16) for reducing the speed of the motor vehicle (2), wherein
- in a special braking operating mode a deceleration request (V) is captured
- depending on the deceleration request (V) a target engine speed curve (n_{target}) of the electrical engine (12) is determined and
- an actual engine speed (n_{actual}) of the electrical motor (12) for reducing the speed of the motor vehicle (2) is adapted to the target engine speed curve (n_{target}), wherein the target speed curve (n_{target}) is assigned an engine speed range (20) and wherein the engine speed range (20) defines a predetermined interval (Δn) from the target engine speed curve (n_{target}) and the actual engine speed (n_{actual}) is regulated within the engine speed range (20).

2. Method according to the preceding claim,
**characterised in that**
the target speed curve (n_{target}), when approaching the actual engine speed (n_{actual}), is adapted to the interval (Δn) of the engine speed range (20) contrary to the course of the actual engine speed (n_{actual}).

3. Method according to one of the preceding claims,
**characterised in that**
the motor vehicle (2) is braked to a standstill by means of the electrical engine (12) in the case of failure of the mechanical braking device (16).

4. Method according to one of the preceding claims,
**characterised in that**
Several target speed curves (n_{target}) are stored in a database (22) and a target speed curve (n_{target}) based on the deceleration request (V) is selected and predetermined depending on the speed.

5. Method according to one of the preceding claims,
in which an autonomous driving mode for autonomous control of a driving task of the motor vehicle (2) is provided and the special braking operating mode takes place in particular only during the autonomous driving mode

6. Method according to one of the preceding claims,
**characterised in that**
the special braking operating mode is designed exclusively to reduce speeds of the motor vehicle (2) by a value in the scope from 10 km/h to 30 km/h.

7. Method according to one of the preceding claims,
**characterised in that**
several electrical engines for positive and negative acceleration are used, in particular wheel hub motors.

8. Method according to one of the preceding claims,
In which the special braking operating mode is activated only in the case of a failure of the mechanical braking device (16).

9. Motor vehicle (2) which has:
- an electrical engine (12) for the positive or negative acceleration of the motor vehicle (2) and
- a mechanical braking device (16) for reducing the speed of the motor vehicle (2),
wherein for controlling a braking operating mode a controller (18) is provided and the controller (18) is configured such that in operation
- in the special breaking operating mode a deceleration request (V) Is captured,
- depending on the deceleration request (V) a target engine speed curve (n_{target}) of the electrical engine (12) is determined and
- An actual engine speed (n_{actual}) of the electrical engine (12) for reducing the speed of the motor-vehicle (2) is adapted to the determined target engine speed curve (n_{target}), wherein the target engine speed curve (n_{target}) is assigned an engine speed range (20) and **characterised in that**
the engine speed range (20) defines a predetermined interval (An) from the target engine speed curve (n_{target}) and the actual engine speed (n_{actual}) is regulated within the engine speed range (20).

## Revendications

1. Procédé de fonctionnement d'un véhicule automobile (2) qui présente :
- un moteur électrique (12) pour l'accélération positive ou négative du véhicule automobile (2) ainsi que
- un dispositif de freinage mécanique (16) pour la réduction de la vitesse du véhicule automobile (2), dans lequel
- dans un mode de fonctionnement de freinage spécial une exigence de ralentissement (V) est détectée,
- en fonction de l'exigence de ralentissement (V), une allure de vitesse de rotation de consigne (n_{de consigne}) du moteur électrique (12) est calculée et
- une vitesse de rotation réelle (n_{réelle}) du moteur électrique (12) pour la réduction de la vitesse du véhicule automobile (2) est adaptée à l'allure de vitesse de rotation de consigne calculée (n_{de consigne}), dans lequel une bande de vitesse de rotation (20) est attribuée à l'allure de vitesse de rotation de consigne (n_{de consigne}) et dans lequel la bande de vitesse de rotation (20) définit un écart prédéfini (Δn) de l'allure de vitesse de rotation de consigne (n_{de consigne}) et la vitesse de rotation réelle (n_{réelle}) est régulée dans la bande de vitesse de rotation (20).

2. Procédé selon la revendication précédente,
**caractérisé en ce que**
l'allure de vitesse de rotation de consigne (n_{de consigne}) est adaptée lors d'une approche de la vitesse de rotation réelle (n_{réelle}) de l'écart (Δn) de la bande de vitesse de rotation (20) en sens contraire à l'allure de la vitesse de rotation réelle (n_{réelle}).

3. Procédé selon l'une quelconque des revendications précédentes,
**caractérisé en ce que**
le véhicule automobile (2) est freiné au moyen du moteur électrique (12) en cas de panne du dispositif de freinage mécanique (16) jusqu'à l'arrêt.

4. Procédé selon l'une quelconque des revendications précédentes,
**caractérisé en ce que**
plusieurs allures de vitesse de rotation de consigne (n_{de consigne}) sont enregistrées sur une base de données (22) et une allure de vitesse de rotation de consigne (n_{de consigne}) est sélectionnée et prédéfinie en fonction de la vitesse sur la base de l'exigence de ralentissement (V).

5. Procédé selon l'une quelconque des revendications précédentes,
pour lequel un mode de roulement autonome est prévu pour la commande autonome d'une tâche de conduite du véhicule automobile (2) et le mode de fonctionnement de freinage spécial n'est effectué en particulier que pendant le fonctionnement de roulement autonome.

6. Procédé selon l'une quelconque des revendications précédentes,
**caractérisé en ce que**
le mode de fonctionnement de freinage spécial est conçu exclusivement pour la réduction de vitesses du véhicule automobile (2) d'une valeur dans l'étendue de 10 km/h à 30 km/h.

7. Procédé selon l'une quelconque des revendications précédentes,
**caractérisé en ce que**
plusieurs moteurs électriques sont utilisés pour l'accélération positive et négative, en particulier des moteurs sur moyeu de roue.

8. Procédé selon l'une quelconque des revendications précédentes,
pour lequel le mode de fonctionnement de freinage spécial n'est activé que lors d'une panne du dispositif de freinage mécanique (16).

9. Véhicule automobile (2) qui présente :
- un moteur électrique (12) pour l'accélération positive ou négative du véhicule automobile (2) ainsi que
- un dispositif de freinage mécanique (16) pour la réduction de la vitesse du véhicule automobile (2),
dans lequel pour la commande d'un mode de fonctionnement de freinage un dispositif de commande (18) est prévu et le dispositif de commande (18) est conçu de telle manière que dans le fonctionnement
- dans le mode de fonctionnement de freinage spécial, une exigence de ralentissement (V) soit détectée,
- en fonction de l'exigence de ralentissement (V) une allure de vitesse de rotation de consigne (nde consigne) du moteur électrique (12) soit calculée et
- une vitesse de rotation réelle (n_{réelle}) du moteur électrique (12) pour la réduction de la vitesse du véhicule automobile (2) soit adaptée à l'allure de vitesse de rotation de consigne calculée (n_{de consigne}), dans lequel une bande de vitesse de rotation (20) est attribuée à l'allure de vitesse de rotation de consigne (n_{de consigne}) et **caractérisé en ce que**
la bande de vitesse de rotation (20) définit un écart prédéfini (An) de l'allure de vitesse de rotation de consigne (n_{de consigne}) et la vitesse de rotation réelle (n_{réelle}) est régulée dans la bande de vitesse de rotation (20).
